# EUROPEAN PATENT SPECIFICATION

(11) **EP 3 760 425 B1**
(45) Date of publication and mention of the grant of the patent: **18.05.2022**
(21) Application number: 20183224.3
(22) Date of filing: 30.06.2020
(51) Int. Cl.: B29D 30/68

(54) **PROCESS FOR OBTAINING A TREAD HAVING INCREASED DRAINAGE**
VERFAHREN ZUR HERSTELLUNG EINER LAUFFLÄCHE MIT ERHÖHTER ABLEITUNG
PROCÉDÉ D'OBTENTION D'UNE BANDE DE ROULEMENT PRÉSENTANT UN DRAINAGE ACCRU

(30) Priority: 02.07.2019 IT 201900010728
(43) Date of publication of application: 06.01.2021
(73) Proprietor: Bridgestone Europe NV/SA, 1932 Zaventem (BE)
(72) Inventor: AGORETTI, Pasquale, 00128 Roma (IT); RODRIGUEZ, Giuseppe, 00128 Roma (IT); MAEDA Shimpei, 00128 Roma (IT)
(74) Representative: Marchetti, Alessio

(56) References cited:
- EP-A1- 0 669 203
- WO-A1-2017/086575
- US-A- 4 564 737

## Description

The present invention relates to a process for the preparation of a tread for a tyre having increased drainage capability.

Part of the research in the field of pneumatic tyres is concentrated on obtaining treads that have improved performance in terms of wet grip and, in particular, in terms of wet braking.

As is known to a person skilled in the art, the grip of the tread on the road surface under wet conditions is a function of the capability of the tread itself to remove the layer of water which forms between the road surface and the tread. This layer of water necessarily compromises the effective grip of the tread on the road surface.

To facilitate the removal of the layer of water, the treads are provided with grooves. In fact, by means of the grooves of the tread, a drainage step is implemented.

In this regard, it is important to explain how the braking action under wet conditions of a pneumatic tyre provides for a first drainage step, wherein the layer of water located between the tread and the road surface is removed from the tread, and a contact step, wherein the blocks of the tread adhere to the road surface. The shorter the drainage step and the more water that is removed, the more efficient the braking action.

As is known, a solution for rendering the drainage step shorter and also for increasing the quantity of water that is drained, is that of increasing the volume of the grooves within the tread. This solution, although it succeeds in rendering the drainage step shorter and more effective, nevertheless causes the contact surface between the tread and the road surface to be reduced to the detriment of the contact step itself and, therefore, of the braking and steering action. Furthermore, it is known that an increase in the volume of the grooves can negatively influence the wear resistance of the tread. Patent document EP 0 669 203 A1 discloses a process for the implementation, by incision with a laser within the grooves of a tyre tread, a surface structure comprising projecting elements.

The inventors of the present invention have created a method for imparting a specific texture to the surface of the grooves with the aim of rendering the drainage step shorter, without thereby reducing the contact surface between the tread and the road surface.

The method that is the object of the present invention comprises technical characteristics that ensure both surface textures that are capable of rendering the drainage step shorter, and, at the same time, increased versatility for the type of texture to be implemented.

In particular, the method of the present invention creates a texture comprising a plurality of cylinders or triangular prisms. In this way, it has been confirmed that the contact angle between a drop of water and the surface is increased to the point of ensuring a shorter drainage step. In fact, as is known to a person skilled in the art, the greater the contact angle between the drop of water and the surface of the grooves, the greater will be the tendency of the water to evacuate the surface and, therefore, the shorter the drainage step will be.

For some time in the tyre industry, it has been known that particular surface textures of the grooves of the tread favor a more rapid evacuation of the water. Such a solution has the great advantage of intervening only upon the surface thereof and not upon the number and/or upon the dimensions thereof, therefore without reducing the contact surface between the tread itself and the road surface. The methods up to now that were used for implementing the surface textures of the grooves of the treads have related to the use of associated molds, which during the vulcanization step are used to define the intended surface texture.

Nevertheless, until now this type of solution collided with requirements of a productive nature, insofar as frequently there is a need to have to modify the surface texture of the grooves as a function of the type of compound with which the tread has been implemented. It is known, in fact, that the efficacy of the dimensional characteristics of the surface texture in terms of drainage speed also depends upon the composition of the rubber of the tread. In fact, the contact angle depends upon the combination of material and geometry.

Obviously, the production of these molds involves a cost, both in terms of time and in terms of economy, and to have to modify them each time as a function of the compounds in rubber with which the tread is implemented would translate into a problem in terms of productivity.

The inventors of the present invention have created a method which, by means of the use of a laser under particular operating conditions, ensures the possibility of producing the intended surface texture of the grooves of the tread without thereby implying disadvantages in terms of productivity.

One of the main advantages of the invention resides in the fact that this treatment, which is the object of the invention, is applied only within the grooves (therefore within the existing voids). This means that the resulting advantages will endure over time, also upon wear of the tread.

The object of the present invention is a process for the creation of a surface texture within the grooves of a tread for a tyre that is composed of protruding elements having the shape of a cylinder or triangular prism; said process being characterized in that it comprises an etching step, wherein a laser beam is applied directly onto a surface of the grooves of a vulcanized tread; said laser beam having: a power ranging from between 10 and 50 W, a frequency ranging from between 1 and 10 kHz, a resolution ranging from between 0.01 and 1 mm, and a scanning speed ranging from between 1 and 1000 mm/s.

Preferably, the power ranges between 20 and 40 W, the frequency ranges between 3 and 7 kHz, the resolution ranges between 0.05 and 0.15 mm, and a scanning speed ranges between 300 and 700 mm/s.

The inventors of the present invention have confirmed that, if the operating conditions indicated above are observed, it is possible to create a surface texture of the grooves that has the intended characteristics of hydrophobicity in terms of contact angle.

As will be illustrated in the experimental part indicated below, if a laser were to be used under operating conditions different from those outlined above, it would not be possible to obtain a surface having the intended hydrophobicity characteristics.

Preferably, said protruding elements each have a height ranging from between 0.01 and 2 mm and an axis of extension that forms an angle with the surface of the groove ranging from between 60 and 120°; said protruding elements being spaced apart therebetween by a distance ranging from between 0.01 and 5 mm.

More preferably, said protruding elements each have a height ranging from between 0.05 and 0.5 mm and an axis of extension that forms an angle with the surface of the groove ranging from between 80 and 100°; said protruding elements being spaced apart therebetween by a distance ranging from between 0.05 and 1 mm.

Another object of the present invention is a tread for a tyre wherein, within its grooves, by means of the method of the present invention, a surface texture comprising protruding elements in the shape of a cylinder or triangular prism has been implemented.

A further object of the present invention is a pneumatic tyre comprising the tread implemented using the method of the present invention.

The following are implementation examples given purely by way of illustration and not limitation.

Two different types of experimental tests were implemented: (a) tests of different operating conditions of the laser and (b) tests of different surface texture.

The first type of experimental tests provides for the use of a laser beam under different operating conditions for the implementation of an identical surface texture. In this way, it is demonstrated that if the proper operating conditions of the present invention are not used, it is not possible to obtain the intended hydrophobicity advantages.

The second type of experimental tests provides for the measurement of the contact angle between a drop of water and surfaces having different textures. In this way, it is demonstrated how the texture comprising protruding elements in the shape of a cylinder or a triangular prism is that which results in a greater contact angle with a drop of water.

### - Tests of different operating conditions of the laser

Indicated in Table I are the different operating conditions of the laser used.

The same laser (CO₂ laser) was used for all of the tests on a surface of the grooves of the same tread.

**TABLE I**

| | A | B | C | D | E | F | G |
|---|---|---|---|---|---|---|---|
| Power (W) | 15 | 15 | 15 | 15 | 30 | 30 | 30 |
| Frequency (kHz) | 1 | 1 | 5 | 5 | 1 | 1 | 5 |
| Scanning speed (mm/s) | 500 | 500 | 1000 | 1000 | 1000 | 1000 | 1000 |
| Resolution (mm) | 0.01 | 0.1 | 0.01 | 0.1 | 0.1 | 0.01 | 0.1 |

Indicated below are the results obtained from the tests A - G of Table I
Test A: low etching depth
Test B: low etching depth
Test C: low resolution
Test D: low resolution
Test E: high etching depth
Test F: high etching depth
Test G: excellent

### - Tests of different surface texture

Four surfaces having a different vulcanized rubber texture were subject to testing, and the contact angle between a drop of water and each of the four surfaces was measured.

The four surfaces subjected to testing were implemented using the same vulcanized rubber composition, typical of a tread.

The specifications of the textures of the four surfaces are as follows: the first surface (A') is without projecting elements (no laser machining has been performed); the second surface (B') has a texture that comprises protruding elements in a parallelepiped shape; the third surface (C') has a texture that comprises protruding elements in the shape of a triangular prism; the fourth surface (D') has a texture that comprises elements having a cylindrical shape.

The surfaces B', C' and D' were implemented using the operating conditions illustrated in test G of Table I. The protruding elements of the three surfaces all have the same height, the same surface and the same distance therebetween. In particular, the protruding elements each have a height equal to 0.5 mm and an axis of extension that forms a 90° angle with the surface of the groove. Furthermore, the protruding elements are spaced apart therebetween by a distance of 0.5 mm.

The contact angles were measured using a tensiometer according to the method described in ASTM D7334.

Indicated in Table II are the measured contact angles.

**TABLE II**

| | A' | B' | C' | D' |
|---|---|---|---|---|
| Contact angle | 120° | 150° | 165° | 163° |

As is possible to confirm from the data indicated above, the inventors of the present invention have implemented a method having technical characteristics that are both capable of producing surface textures suitable for ensuring a short drainage step (thus, without decreasing the contact surface between the tread and the road surface) and capable of changing the type of surface texture as a function of the composition of the tread without resulting in any type of disadvantage in terms of production.

Furthermore, it is important to underline that, insofar as this type of treatment is only applied within the grooves (therefore within the existing voids), the resulting advantages will endure over time, also upon wear of the tread.

## Claims

1. Process for the implementation, within the grooves of a tread for a tyre, a surface texture that is composed of protruding elements having the shape of a cylinder or triangular prism; said process being **characterized in that** it comprises an etching step, wherein a laser beam is applied directly onto a surface of the grooves of a vulcanized tread; said laser beam having: a power ranging from between 10 and 50 W, a frequency ranging from between 1 and 10 kHz, a resolution ranging from between 0.01 and 1 mm, and a scanning speed ranging from between 1 and 1000 mm/s.

2. Process according to claim 1, **characterized in that** said laser beam has: a power ranging from between 20 and 40 W, a frequency ranging from between 3 and 7 kHz, a resolution ranging from between 0.05 and 0.15 mm, and a scanning speed ranging from between 300 and 700 mm/s.

3. Process according to claim 1 or 2, **characterized in that** said protruding elements each have a height ranging from between 0.01 and 2 mm and an axis of extension that forms an angle with the surface of the groove ranging from between 60 and 120°; said protruding elements being spaced apart therebetween by a distance ranging from between 0.01 and 5 mm.

4. Process according to claim 1 or 2, **characterized in that** said protruding elements each have a height ranging from between 0.05 and 0.5 mm and an axis of extension that forms an angle with the surface of the groove ranging from between 80 and 100°; said protruding elements being spaced apart therebetween by a distance ranging from between 0.05 and 1 mm.

5. Tread for a tyre wherein, within its grooves, by means of the method according to one of the preceding claims, a surface texture comprising protruding elements in the shape of a cylinder or triangular prism has been implemented.

6. Pneumatic tyre comprising a tread according to claim 5.

## Patentansprüche

1. Verfahren zur Realisierung, innerhalb der Rillen einer Lauffläche für einen Reifen, einer Oberflächentextur, die aus hervorstehenden Elementen besteht, die die Form eines Zylinders oder eines dreieckigen Prismas aufweisen; wobei das Verfahren **dadurch gekennzeichnet ist, dass** es einen Ätzschritt umfasst, wobei ein Laserstrahl direkt auf eine Oberfläche der Rillen einer vulkanisierten Lauffläche angewendet wird; wobei der Laserstrahl aufweist: eine Leistung in einem Bereich zwischen 10 und 50 W, eine Frequenz in einem Bereich zwischen 1 und 10 kHz, eine Auflösung in einem Bereich zwischen 0,01 und 1 mm und eine Abtastgeschwindigkeit in einem Bereich zwischen 1 und 1000 mm/s.

2. Verfahren nach Anspruch 1, **dadurch gekennzeichnet, dass** der Laserstrahl aufweist: eine Leistung in einem Bereich zwischen 20 und 40 W, eine Frequenz in einem Bereich zwischen 3 und 7 kHz, eine Auflösung in einem Bereich zwischen 0,05 und 0,15 mm und eine Abtastgeschwindigkeit in einem Bereich zwischen 300 und 700 mm/s.

3. Verfahren nach Anspruch 1 oder 2, **dadurch gekennzeichnet, dass** die hervorstehenden Elemente jeweils eine Höhe in einem Bereich zwischen 0,01 und 2 mm und eine Erstreckungsachse aufweisen, die mit der Oberfläche der Rille einen Winkel in einem Bereich zwischen 60 und 120° bildet; wobei die hervorstehenden Elemente durch einen Abstand zwischen 0,01 und 5 mm voneinander entfernt sind.

4. Verfahren nach Anspruch 1 oder 2, **dadurch gekennzeichnet, dass** die hervorstehenden Elemente jeweils eine Höhe in einem Bereich zwischen 0,05 und 0,5 mm und eine Erstreckungsachse aufweisen, die mit der Oberfläche der Rille einen Winkel in einem Bereich zwischen 80 und 100° bildet; wobei die hervorstehenden Elemente durch einen Abstand zwischen 0,05 und 1 mm voneinander entfernt sind.

5. Lauffläche für einen Reifen, wobei innerhalb seiner Rillen mittels des Verfahrens nach einem der vorstehenden Ansprüche eine Oberflächenstruktur realisiert ist, die hervorstehende Elemente in Form eines Zylinders oder eines dreieckigen Prismas umfasst.

6. Luftreifen, umfassend einen Laufflächenabschnitt nach Anspruch 5.

## Revendications

1. Procédé pour la mise en œuvre, au sein des rainures d'une bande de roulement pour pneumatique, d'une texture de surface composée d'éléments en saillie ayant la forme d'un cylindre ou de prisme triangulaire, ledit procédé étant **caractérisé en ce qu'il** comprend une étape de gravure, dans laquelle un faisceau laser est appliqué directement sur une surface des rainures d'une bande de roulement vulcanisée ; ledit faisceau laser présentant : une puissance allant de 10 à 50 W, une fréquence allant de 1 à 10 kHz, une résolution allant de 0,01 à 1 mm, et une vitesse de balayage allant de 1 à 1000 mm/s.

2. Procédé selon la revendication 1, **caractérisé en ce que** ledit faisceau laser présente : une puissance allant de 20 à 40 W, une fréquence allant de 3 à 7 kHz, une résolution allant de 0,05 à 0,15 mm, et une vitesse de balayage allant de 300 à 700 mm/s.

3. Procédé selon la revendication 1 ou 2, **caractérisé en ce que** lesdits éléments en saillie présentent chacun une hauteur allant de 0,01 à 2 mm et un axe d'extension qui forme un angle avec la surface de la rainure allant de 60 à 120°; lesdits éléments en saillie étant espacés entre eux d'une distance allant de 0,01 à 5 mm.

4. Procédé selon la revendication 1 ou 2, **caractérisé en ce que** lesdits éléments en saillie ont chacun une hauteur comprise entre 0,05 et 0,5 mm et un axe d'extension qui forme un angle avec la surface de la rainure allant de 80 à 100° ; lesdits éléments en saillie étant espacés entre eux d'une distance allant de 0,05 à 1 mm.

5. Bande de roulement pour un pneumatique dans laquelle, au sein de ses rainures, au moyen du procédé selon l'une des revendications précédentes, une texture de surface comprenant des éléments en saillie en forme de cylindre ou de prisme triangulaire a été mise en œuvre.

6. Pneumatique comprenant une bande de roulement selon la revendication 5.
